# EUROPÄISCHE PATENTSCHRIFT

(11) **EP 1 077 856 B1**
(45) Veröffentlichungstag und Bekanntmachung des Hinweises auf die Patenterteilung: **10.12.2003**
(21) Anmeldenummer: 99950337.8
(22) Anmeldetag: 12.05.1999
(51) Int. Cl.: B61D 3/10, B61G 5/00, B61F 5/38

(54) **SCHIENENFAHRZEUG**
RAIL VEHICLE
VEHICULE SUR RAILS

(30) Priorität: 13.05.1998 DE 19823382; 18.06.1998 DE 19828900
(43) Veröffentlichungstag der Anmeldung: 28.02.2001
(73) Patentinhaber: DB Reise & Touristik AG, 60326 Frankfurt (DE)
(72) Erfinder: SCHENK, Herwig, D-32423 Minden (DE); GRAB, Martin, D-32423 Minden (DE); KÖNIG, Frank, D-10247 Berlin (DE); STANEFF, Theodor, D-88697 Bermatingen (DE); HOLSTEIN, Wolfgang, D-10777 Berlin (DE); KÜHNEL, Arne, D-12203 Berlin (DE)
(74) Vertreter: Zinken-Sommer, Rainer
(86) Internationale Anmeldenummer: EP9903301
(87) Internationale Veröffentlichungsnummer: WO99058385

(56) Entgegenhaltungen:
- EP-A- 0 240 407
- EP-A- 0 558 295
- DE-A- 4 343 608
- FR-A- 2 050 268
- US-A- 4 233 908

## Beschreibung

Die Erfindung betrifft ein Schienenfahrzeug gemäß dem Oberbegriff des Anspruchs 1.

Es sind Gliederzüge bekannt, die aus grundsätzlich trennbaren, aber im regulären Betrieb zusammenhängend eingesetzten Teilen (Segmenten) bestehen, von denen jeweils zwei über ein gemeinsames ein- oder mehrachsiges Drehgestell auf dem Gleis abgestützt sind. Da sich hier jeweils zwei Fahrzeugglieder einige Konstruktionselemente teilen, ist mit den Gliederzügen eine gewisse Verringerung des baulichen Aufwandes und Gewichts - bezogen auf die Transportkapazität - erreicht worden.

Im Übergangsbereich zwischen den Segmenten ist der für Schwenkbewegungen der Fahrzeugglieder gegeneinander erforderliche Spalt seitlich und oben tunnelförmig mit einer flexiblen Gummibalgenkonstruktion verschlossen. Diese wird üblicherweise so ausgelegt, daß sie die durch den Fahrbahnverlauf aufgeprägten Relativbewegungen der Zugteile möglichst wenig beeinflußt, während der Fahrzeuglauf durch seitliche Puffer oder zusätzliche Kupplungsglieder (neben der Mittelkupplung) stabilisiert wird.

Die Ausführung der Wagenkasten-Übergangseinrichtung, insbesondere der Balgenkonstruktionen, ist Gegenstand ständiger Weiterentwicklung gewesen, die jedoch wenig am Prinzip geändert hat.

Aus der deutschen Offenlegungsschrift Nr. 22 32 279 ist eine Modifikation der klassischen Gummibalgenkonstruktion bekannt, mit der Relativbewegungen zwischen den Fahrzeuggtiedern dämpfend stabilisiert werden sollen. Hierzu dient eine Ausführung der Seitenteile als nut- und federartig ineinandergreifende Hohlgummiprofile in Verbindung mit einem einstellbaren Innendruck. Hierbei handelt es sich lediglich um die Veränderung eines passiven Dämpferelements nach Art eines verstellbaren Stoßdämpfers.

Aus der deutschen Offenlegungsschrift DE 3 124 682 A1 ist eine Wagenübergangseinrichtung für ein spurgeführtes Hochgeschwindigkeitsfahrzeug bekannt, bei der mehrteilige, aufblasbare Hohlkammerprofile mit über den Innendruck variabel einstellbarer Steifigkeit vorgesehen sind. Hiermit soll eine in allen Fahrzuständen aerodynamisch vorteilhafte, schmutzdichte und wirksam geräuschdämmende Verkleidung des Übergangsbereiches gesichert werden.

Auch hierdurch wird nur das Profil in seiner Eigenschaft als Übergangsbegrenzung verändert, ohne daß eine grundsätzliche Beeinflussung der fahrdynamischen Eigenschaften des Gliederfahrzeugs beabsichtigt wäre.

Die Druckschrift US-A-4,233,908 offenbart ein Gliederfahrzeug, das zum Betrieb auf einem beiderseits des Fahrzeugs verlaufenden Hochgleis zwischen dessen Schienen eingehängt ist. Das Fahrzeug ist in kurze Segmente von etwa einem halben Meter Länge unterteilt. Zur Verbindung benachbarter Segmente sind elastische Verbindungselemente vorgesehen, die sich über die Stirnseiten der Segmentschale erstrecken. Die Verbindungselemente übertragen lediglich längs des Zuges gerichtete Kräfte. Es werden seitlich angebrachte Stützrollen benötigt, um das Fahrzeug im Spurkanal zu halten. Für konventionelle Gleise ist ein solches System nicht geeignet.

Die Druckschrift DE 42 13 948 A1 offenbart ein Schienenfahrzeug, bei dem zwischen zwei benachbarten, mit Kragarmen nach Jakobs-Bauart auf einem gemeinsamen Drehgestell aufliegenden Wagenkästen ein starres Zwischenstück vorgesehen ist, wobei die Kragarme des einen Wagenkastens an dem Zwischenstück um eine vertikale Achse und die Kragarme des anderen Wagenkastens an dem Zwischenstück um eine Querachse drehbar gelagert sind. Die Überleitung des Kraftflusses zwischen den Wagenkästen erfolgt konzentriert im Bodenbereich über die Kragarme und eine Anschlagstange.

Nachteilig ist bei dieser Lösung zum einen, daß eine entsprechend robuste und schwere Konstruktion der den Kraftfluß leitenden Bereiche des Wagenkastens erforderlich ist. Zum anderen erfolgt die Spurführung bei einem derartigen Schienenfahrzeug allein durch die Wechselwirkung der Räder mit dem Gleis. Dies hat zur Folge, daß Gleisunebenheiten und durch die Fahrdynamik entstehende, zeitlich veränderliche Kräfte vom Rad über das Fahrwerk auf den Wagenkasten übertragen werden und eine entsprechend unruhige, für Fahrgäste unkomfortable Fahrt bewirken. Alternativ sind aufwendige Maßnahmen zur gedämpften Lagerung des Wagenkastens auf dem Fahrgestell erforderlich, die wiederum das Gewicht des Fahrzeugs weiter erhöhen.

Der Erfindung liegt deshalb die Aufgabe zugrunde, ein Schienenfahrzeug mit einer fahrdynamisch verbesserten Konstruktion anzugeben, die insbesondere vorteilhaft in Leichtbauweise auszuführen ist.

Die Aufgabe wird durch ein Schienenfahrzeug mit den im Anspruch 1 angegebenen Merkmalen gelöst.

Die Erfindung beinhaltet die aktive, ausschließliche Einstellung der Position oder Bewegung von Rumpfsegmenten relativ zueinander durch Stellglieder oder Aktivatoren. Es wird also nicht über die Schnittstelle lediglich eine zusätzliche Kraft ausgeübt, welche die Kraftüberleitung über Puffer, Kupplungselemente oder sonstige zentrale Krafteinleitungsvorrichtungen wie Lenker, lokale Dämpfer oder dergleichen bewirkt. Vielmehr wird die Kraftüberleitung aktiv dadurch bestimmt, daß die Kopplung der benachbarten Segmente im wesentlichen über ihren gesamten Stirnquerschnitt beeinflußt wird. Dabei kann es sich um Dämpfungsmittel oder um in ihrer Elastizität -gegebenenfalls richtungsabhängig -veränderliche Elemente oder aber um Aktivatoren in Form von aktiv antreibbaren Stellmitteln handeln. Zusätzlich sind auch energieverzehrende Mittel im Falle eines Stoßes aktiv auslösbar.

Einstellbar ist damit eine aktive Streckung oder Minimierung der Krümmung des Fahrzeugs oder eine gesteuerte, aktive Lateratbewegung des Fahrwerks auf den Schienen ("aktiver Sinuslauf"). Durch entsprechende Veränderung lediglich der Federsteifigkeiten in den Segmentverbindungen kann auch die Elastizität beeinflußt werden, so daß sich unterschiedliche Komforteigenschaften einstellen lassen.

Die die Fahrdynamik des Fahrzeugs beeinflussenden Elemente arbeiten in Abhängigkeit von der Geometrie der Fahrbahn. Hierbei können die für den Fahrweg relevanten Daten entweder - bevorzugt an der Zugspitze - aktuell ermittelt werden oder aber bei einer früheren Fahrt desselben oder eines anderen Fahrzeugs aufgenommen worden sein. Dabei ist die Übertragung über den Funkweg ebenfalls eingeschlossen. Die die Geometrie des Gleiskanals betreffenden Daten sind bevorzugt zusammen mit einer Ortsinformation in einem Speicher abgelegt, welcher durch eine aktuelle Ortsinformation ausgewählt wird, die bei der Fahrt entweder über ein Satellitennavigationssystem (GPS) ermittelt oder aber mit Hilfe von Kennmarken im Gleiskanal abgelesen wird.

Die Erfindung schließt weiterhin die grundsätzliche technische Lehre ein, eine neue Qualität der Fahrdynamik durch eine Gliederung des Fahrzeuges in relativ kurze, starre Einheiten bzw. Fahrzeugglieder in Verbindung mit einer aktiv gesteuert elastischen Ausbildung der Übergangs- und Verbindungsabschnitte zwischen diesen sowie einer aktiven Steuerung der Fahrdynamik in Anpassung an Verlauf und Profil der Fahrbahn zu erreichen. Damit ist auch eine neue Qualität hinsichtlich der Interaktivität von Fahrzeug und Fahrweg unterweitestgehender Fahrbahnschonung verbunden.

Die Rumpfsegmente sind über im wesentlichen querschnittsgleiche Segmentverbindungen mit steuerbarem Längs- und Ouerelastizitätsprofil miteinander verbunden, durch die in aktiv kontrollierter Weise für jede Einheit durch ein entsprechendes Drehmoment die Orientierung der vorhergehenden und der nachfolgenden Einheit zur Wirkung gebracht wird. Hierdurch werden die Einheiten relativ zueinander und zur Spur ausgerichtet. Das spezielle, veränderliche Elastizitäts- oder Ausrichtungsprofil der Segmentverbindungen sichert bei Geradeausfahrt eine gegenüber herkömmlichen Gliederzügen erhöhte Quersteifigkeit des Fahrzeugverbandes und - unterstützt durch eine relativ flexible Spurführung der starren Einheiten, die weiter unten näher dargestellt ist - bei Kurvenfahrt eine verbesserte Anpassung der Fahrzeugform an den Fahrwegverlauf und das Fahrbahnprofil. Beide Wirkungen ermöglichen letztlich eine wesentliche Verbesserung des Fahrzeuglaufes und somit eine Erhöhung des Fahrkomforts und der Grenzgeschwindigkeit.

Vorzugsweise hat jedes Rumpfsegment ein innerhalb seines Mantels angeordnetes, vom Radpaar gestütztes Traggestell, das sich im wesentlichen zur Schienenoberfläche parallel über die Länge und Breite des Rumpfsegments erstreckt und das zumindest einen wesentlichen Teil der Last des Mantels trägt. Durch diese Maßnahme wird der Mantel im wesentlichen von der Funktion befreit, vertikale Lasten zu tragen. Dies erlaubt eine leichte, selbsttragende Konstruktion des Mantels. Die Lasten des Mantels, der Einbauten und Aggregate und nicht zuletzt die Nutzlast (Personen oder Güter) werden über das Traggestell auf besonders kurzen Wegen auf das Fahrwerk übertragen. Günstig ist in diesem Zusammenhang insbesondere eine direkte Verbindung des Fahrwerks mit dem Traggestell. Das Traggestell kann durch Ausgestaltung als Platte oder mit einer entsprechenden Oberfläche gleichzeitig als Innenboden des Fahrzeugs dienen. Es kann aber auch zur Erhöhung des Fahrkomforts unter Zwischenschaltung einer Dämpfungsstufe ein darüber angeordneter, separater Innenboden vorgesehen sein, der über die Dämpfungsstufe auf dem Traggestell gelagert ist. Die aneinandergrenzenden Traggestelle benachbarter Rumpfsegmente sind im Bereich der Segmentverbindungen mit dem erforderlichen Spiel vorzugsweise elastisch miteinander verbunden, etwa mit Hilfe elastormerhaltiger Platten, wobei ihre Beweglichkeit relativ zu einander nicht eingeschränkt, aber trotzdem ein zum Gleis hin geschlossener und sich über die gesamte Länge des Fahrzeugs erstreckender Innenraum definiert wird. Der Mantel ist dabei am Traggestell vorzugsweise nahe dessen in Querrichtung weisenden Seiten befestigt. Die Befestigung läßt keine wesentliche Relativbewegung von Segmentmantel und Traggestell zu.

Bei einer weiteren bevorzugten Ausführungsform liegt die Verbindungsgerade zwischen den Mittelpunkten der Räder eines Radpaars in einer Querschnittsebene des zugehörigen Rumpfsegmentes. Das Fahrwerk ist dadurch ist Gelenkfunktionen befreit. Vielmehr richtet sich das Radpaar stets entsprechend der augenblicklichen Orientierung des zugehörigen Rumpfsegmentes zum Gleis aus, in Gleisbögen beispielsweise also stets in im wesentlichen radialer Richtung. Dies wird durch vorzugsweise durch die schon erwähnte, direkte Befestigung des Fahrwerks am Traggestell erreicht. Beim Stand der Technik notwendige Zwischengestelle wie ein Drehgestellrahmen oder ein sonstiger Fahrwerksrahmen entfallen, was zu einer zusätzlichen Leichterung des Fahrzeugs führt. Die wesentliche Konsequenz dieser Maßnahme ist, daß die Gelenkeigenschaften vollständig auf die Segmentverbindungen übertragen werden. Aufwendige Drehgestellfahrwerke sind zur Spurführung nicht erforderlich.

Die Steuerung der mechanischen Eigenschaften und gegebenenfalls der Geometrie der Segmentverbindungen kann insbesondere durch die Steuerung des Fluiddrucks in flexiblen Hohlprofilen oder unter Nutzung magnetischer Anziehungs- oder Abstoßungskräfte zwischen benachbarten Teilen der Segmentverbindungen oder aber auch durch aktive Steuerantriebe in Form von Hydraulik oder Linearantrieben erfolgen.

Unerwünschte Schwingungen werden dabei durch eine geeignete Steuerung der Dämpfungscharakteristik der Segmentverbindungen sowie der Verbindungen zwischen Traggestell und Spurführungselement unterbunden.

Von wesentlicher Bedeutung ist, daß ein der Fahrbahn angepaßtes Verhalten in der Weise erzeugt werden kann, daß durch eine aktive Beeinflussung der Segmentverbindungen zwischen den retativ starren Rumpfsegmenten des Gliederfahrzeugs eine aktive Anformung des Gliederfahrzeugs an den Fahrweg erfolgt. Dadurch, daß in Abhängigkeit vom Fahrweg eine bestimmte geometrische Einstellung der Segmente mit Kraftüberleitung im wesentlichen über den gesamten Segmentring vorgebbar ist, erhält das erfindungsgemäße Gliederfahrzeug eine segmentübergreifende Steifigkeit, welche auch eine weitgehende dynamische Entkopplung des Gliederfahrzeugs von der Fahrbahn ermöglicht.

Zur Steuerung des Kurvenverhaltens können auf beiden Seiten des Fahrzeuges getrennte elastische Elemente mit separater Ansteuerung vorgesehen sein, so daß das Fahrzeug- bzw. Zuglängsprofil vorausschauend dem Fahrbahnverlauf angepaßt werden kann.

Darüber hinaus ist zur Verringerung von ungewollten dynamischen Eigenbewegungen des Gliederfahrzeugs, also beispielsweise Knickverformungen des Zugverbandes sowie Nick-, Gier-, und Rotationsschwihgungen, vorgesehen, die damit einhergehende relative Fehlstellung der Segmente dadurch zu korrigieren, daß die resultierende Spaltbreite der Übergangsbereiche zwischen Elementen abgefragt und in ein Steuersignal zur Beeinflussung der Spaltbreite benachbarter Elemente im Sinne eines Ausgleichs umgesetzt wird. Dadurch erfolgt eine Ausrichtung des Gliederfahrzeugs auf einer Optimallinie. Insbesondere wird eine mögliche Tendenz eliminiert, unkontrollierte Krümmungen einzunehmen. Eine derartige Steuerung läßt sich sowohl für Bewegungen um die Hochachse als auch für Bewegungen um die Querachse einsetzen. Ein derartig geführtes Gliederfahrzeug erhält eine über die einzelnen Segmente hinausgehende Steifigkeit sowie Fahreigenschaften, welche sich von denjenigen eines Gliederfahrzeugs vollständig unterscheiden, das lediglich über elastische Elemente verbunden ist. Wichtig ist dabei auch, daß die Elemente des Gliederfahrzeugs ganzheitlich derart verbunden sind, daß die Kraftüberleitung im wesentlichen über die gesamte Schale der Segmente und die anschließenden Segmentverbindungselemente erfolgt. Näheres hierzu ist einer gleichzeitig eingereichten Patentanmeldung derselben Anmelderin zu entnehmen.

Die Spurführungsetemente sind bei der Ausführung des Fahrzeuges als Schienenfahrzeug (Eisenbahnzug) als Radpaare, insbesondere mit Einzetradanordnung, ausgebildet und bevorzugt im wesentlichen mittig unter den starren Rumpfsegmenten angeordnet. Sie umfassen bevorzugt mit kurzen Ansprechzeiten über hydraulische, pneumatische odermagnetische Aktuatoren verstellbare Dämpfungs- und Federelemente, mit denen auch die Vertikalposition der Rumpfsegmente gesteuert werden kann. Bevorzugt sind die Fahrwerke unmittelbar am Traggestell angeordnet.

In einer bevorzugten Ausführung haben die Segmentverbindungen eine Hybridstruktur aus einer Mehrzahl im wesentlichen mit den Rumpfsegmenten querschnittsgleicher, etwa ringförmiger, starrer Elemente und aus elastischen Elementen mit steuerbarer Steifigkeit bzw. Flexibilität und gegebenfalls auch steuerbarer Geometrie, die an jeweils zwei benachbarte starre Elemente angeformt sind. Deren konkrete Dimensionierung und Ansteuerung ist in Abstimmung auf die im einzelnen zu realisierenden Funktionen und Parameter (Elastizitätsmodul, Härte, innere Reibung etc.) zu wählen.

In einer Leichtbau-Ausführung unter Einsatz faserverstärkter Kunststoffe mit vorteilhaftem Versagensverhalten (sogenanntem "fait-safe"-Verhalten) umfassen die starren Elemente einen ersten und einen zweiten Abschnitt mit unterschiedlichen lateralen Abmessungen. Mindestens ein gesteuert flexibler Abschnitt verbindet jeweils den ersten Abschnitt des einen angrenzenden Elementes mit dem zweiten Abschnitt des anderen Elementes. Die Segmentverbindungen verkürzen sich bei Einwirkung einer Druckkraft in Längsrichtung (z.B. bei einem Frontalaufprall oder Auffahren) in kontrollierter Weise selbstzentrierend und energieabsorbierend, so daß ein Teleskopieren der starren Fahrzeugeinheiten weitestgehend ebenso vermieden wird wie ein Ausknicken einzelner Einheiten aus dem Längsverbund. Eine noch günstigere Kurvendynamik ist speziell auch bei dieser Ausgestaltung durch Vorsehen mehrerer, in Umfangsrichtung aneinandergereihter Abschnitte mit einzeln steuerbarer Flexibilität erzielbar.

In einer alternativen Ausführung sind jeweils erste und zweite starre Elemente mit unterschiedlichen lateralen Abmessungen in Längsrichtung der Segmentverbindungen aneinandergereiht, und ein zwei benachbarte starre Elemente verbindendes elastisches Segment überbrückt die Differenz der lateralen Abmessungen in radialer Richtung derart, daß die Segmentverbindungen sich auch hier bei Einwirkung einer Druckkraft in Längsrichtung selbstzentrierend und energieverzehrend verkürzen.

Die starren Elemente sind zur Gewichtsminimierung bevorzugt aus einem faserverstärkten oder selbstverstärkenden Polymer, insbesondere mit Vorzugsorientierung, hergestellt. Grundsätzlich sind aber auch Leichtmetallegierungen einsetzbar.

Die flexiblen Segmente sind möglichst großflächig mit jeweils einem Außen- bzw. Innenflächenabschnitt der angrenzenden starren Elemente verbunden, wodurch eine hohe Schubfestigkeit der Hybridstruktur in Längsrichtung erzielt wird. Technologisch vorteilhaft ist hier der Einsatz von hochgradig schubfesten Klebverbindungen, ggfs. ergänzt durch formschlüssige Verbindungsmittel.

In Realisierung des oben beschriebenen Verbundprinzips haben die Rumpfsegmente eine deutlich geringere Länge als herkömmliche Drehgestellwagen, nämlich insbesondere Längen von deutlich unter 10 Metern, bevorzugt sogar von nur 3 bis 6 Metern. Die durch den Fahrbahnverlauf aufgeprägten Winkel und Winkel-änderungsgeschwindigkeiten zwischen den Wagenlängsachsen und die dadurch bedingten Stellkräfte und -zeiten halten sich dabei in steuerungstechnisch ohne weiteres beherrschbaren Grenzen.

Die eigentliche Steuereinrichtung ist bevorzugt als zentrale Steuerung für das gesamte Fahrzeug (den Zug) ausgeführt, kann aber auch einzelne, vernetzte Steuermodule für die einzelnen Einheiten umfassen. In jedem Fall ist sie zur Auswertung gespeicherter oder aktuell erfaßter Fahrwegsdaten zur Gewinnung der Steuersignale für die einzelnen Rad- bzw. Achsaufhängungen und Segmentverbindungen ausgebildet. Im Falle einer Steuerung aufgrund von vorab erfaßten und gespeicherten Fahrwegsdaten ist eine hochpräzise (direkte oder indirekte) Positionsbestimmung im Verlaufe der aktuellen Fahrt erforderlich. Hingegen erfordert die aktuelle Ausmessung der Fahrbahn bei jeder Benutzung durch Fühler im Frontbereich eine besonders schnelle Signalverarbeitung, kommt aber ohne Positionserfassung aus.

Dabei ist von besonderer Bedeutung, daß sich viele der dargestellten Elemente einzeln oder in Kombination unabhängig verwenden lassen. Insoweit stellen sie getrennte erfinderische Lösungen dar. Hierbei handelt es sich im einzelnen um die aktive Beeinflussung von die Fahrdynamik des Fahrzeugs beeinflussenden Elementen in Zuordnung zu oder in Abhängigkeit von Positionsdaten bzw. geometrischen Daten des Fahrwegs bei einem Schienenfahrzeug. Des weiteren wird als neu und erfinderisch die Speicherung dieser Daten in einem Schienenfahrzeug angesehen, wenn diese während der Fahrt zur aktiven Beeinflussung von Fahreigenschaften oder von die Fahrdynamik beeinflussenden Elementen bei Erreichen der zugehörigen Position auf dem Fahrweg ausgelesen werden. Schließlich ist auch die aktive Anformung eines Gliederfahrzeuges an die Geometrie des Schienenverlaufs eine unabhängige erfinderische Lösung. Dies gilt auch für eine "Vergleichmäßigung" der Verformung eines Gliederfahrzeugs zur "Weitergabe örtlicher Verformung" an benachbarte Gliederelemente durch entsprechende Sensor- und Steuerelemente unter Einschluß entsprechender Signalverarbeitungsmittel.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figuren 1a und 1b: zwei bevorzugte Ausführungsbeispiele des erfindungsgemäßen Gliederzuges in Seitenansicht,
- Figuren 2a und b: eine bevorzugte konstruktive Ausbildung der Segmentverbindungen bei dem Gliederfahrzeug nach den Figuren 1a und b in verschiedenen Betriebszuständen im Längsschnitt,
- Figur 2c: ein weiteres Ausführungsbeispiel der Segmentverbindungen bei dem Gliederfahrzeug nach den Figuren 1a und b mit einem Aktivator als Antriebselement,
- Figuren 2d und e: eine andere konstruktive Ausbildung der Segmentverbindungen bei dem Gliederfahrzeug nach den Figuren 1a und b mit Aktivierungsmöglichkeit in zwei verschiedenen Betriebszuständen im Längsschnitt,
- Figur 3: ein Blockschaltbild eines Fahrdynamik-Steuersystems für einen Gliederfahrzeug gemäß einer weiteren Ausgestaltung der Erfindung,
- Figur 3a: ein Blockschaltbild einer detaillierten Schaltung zur Umsetzung der ermittelten oder gespeicherten Fahrwegdaten in Steuergrößen zur Ansteuerung von Elementen, welche ihrerseits die Fahrdynamik beeinflussen.
- Figur 4a: eine vereinfachte Querschnittsdarstellung einer Ausführung eines Rumpfsegmentes.

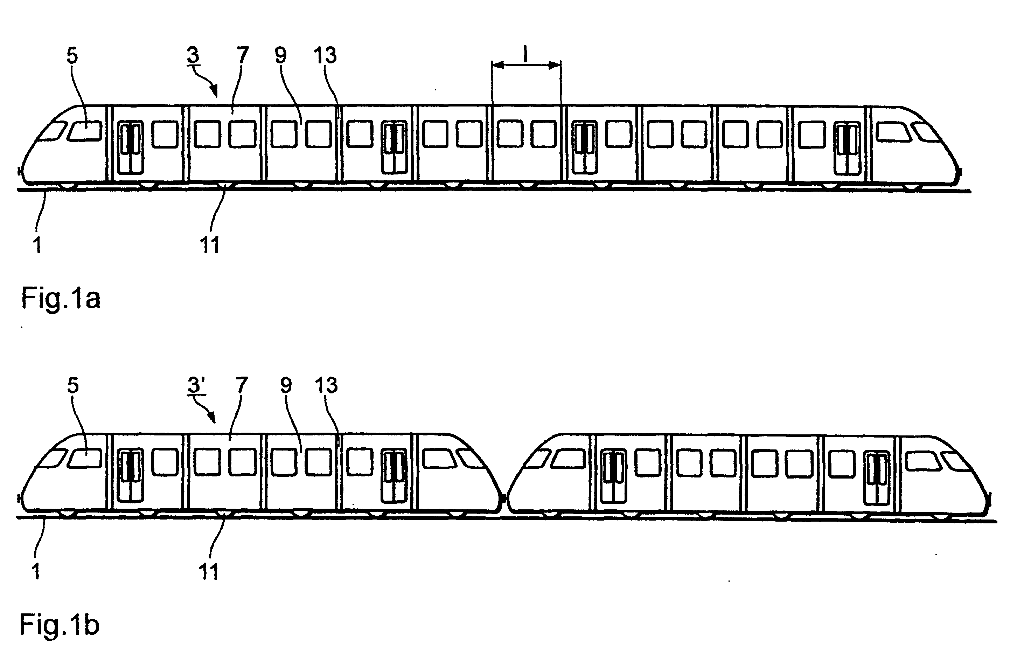

Figur 1a zeigt die schematische (und unmaßstäblich verkürzte) Seitenansicht eines ersten Ausführungsbeispiels eines auf einem Gleis 1 verkehrenden Gliederfahrzeugs 3, das aus gelenkig miteinander verbundenen Segmenten besteht, welche als Rumpfsegmente 5 bis 9 bezeichnet sind. Mit "I" ist die Länge eines Segments bezeichnet. Diese ruhen jeweils auf einem einzelnen, bezogen auf ihre Längserstreckung, mittig angeordneten Radpaar 11 mit in ihren fahrdynamischen Eigenschaften beeinflußbarer Radanordnung und sind jeweils über steuerbar flexibel ausgeführte Segmentverbindungen 13 unter Bildung eines mit den Wagensegmenten im wesentlichen querschnittsgleichen Übergangs miteinander verbunden. Die Laufrichtung der Radpaare fällt mit der Längsrichtung des zugehörigen Segments zusammen. Das Radpaar ist also nicht um eine Hochachse drehbar gelagert.

Figur 1b zeigt hingegen eine andere Ausführung des erfindungsgemäßen Gliederzuges mit einander benachbarten Antriebseinheiten 5 in der Zugmitte, wodurch das Fahrzeug in zwei unabhängige Halbzüge teilbar ist. Die Bedeutung der verwendeten Bezugszeichen entspricht derjenigen gemäß Figur 1a.

Funktionen, Zahl und Anordnung der in der Figur skizzierten Einheiten sind variierbar, und es können - bei Verzicht auf die Möglichkeit der umbaufreien betriebsseitigen Teilung des Zuges - auch sämtliche Einheiten über steuerbar elastische Segmentverbindungen miteinander verbunden sein. Ein Halbzug von 200m Länge wird in der Praxis -je nach Segmentlänge- aus etwa 30 bis 50 Segmenten bestehen.

In bevorzugter Leichtbauausführung haben die Verbindungselemente eine Hybridstruktur, bestehend aus einer Mehrzahl im wesentlichen mit den Rumpfsegmenten querschnittsgleicher, etwa ringförmiger starrer Elemente, deren Abmessung in Längsrichtung größer ist als ihre laterale Abmessung, und aus an jeweils zwei benachbarte starre Elemente angeformten Elastomerabschnitten. Deren Längserstreckung ist zur Gewährleistung eines kontrollierten Fahr- und Crashverhaltens bevorzugt kleiner als diejenige der starren Elemente, die konkrete Dimensionierung hat aber natürlich an den spezifischen Materialparametern (Elastizitätsmodul, Härte, innere Reibung etc.) anzusetzen.

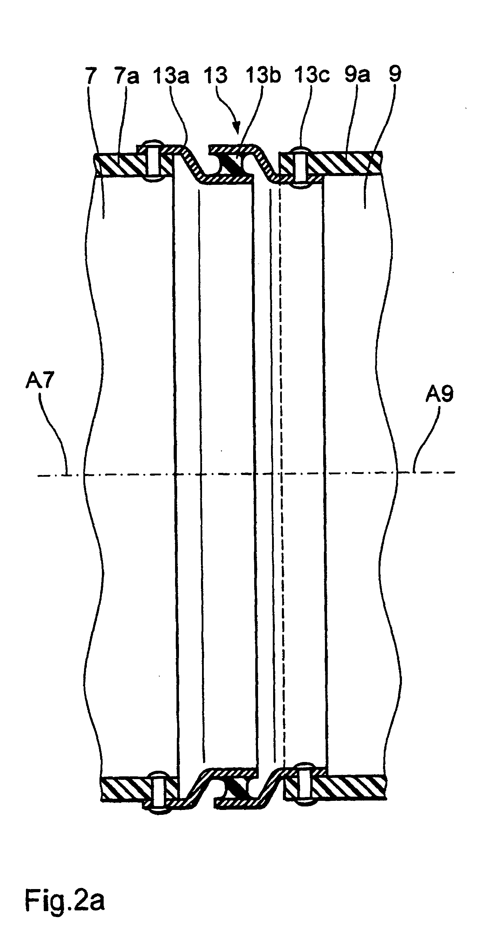

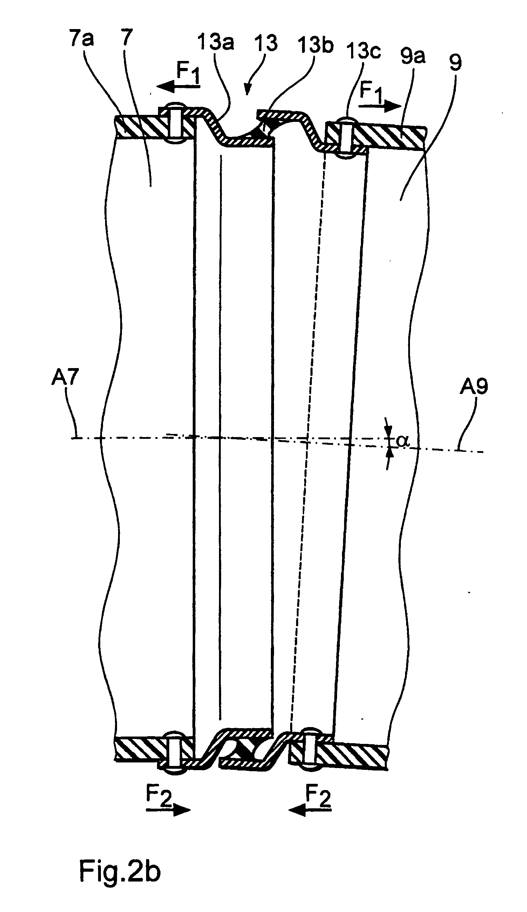

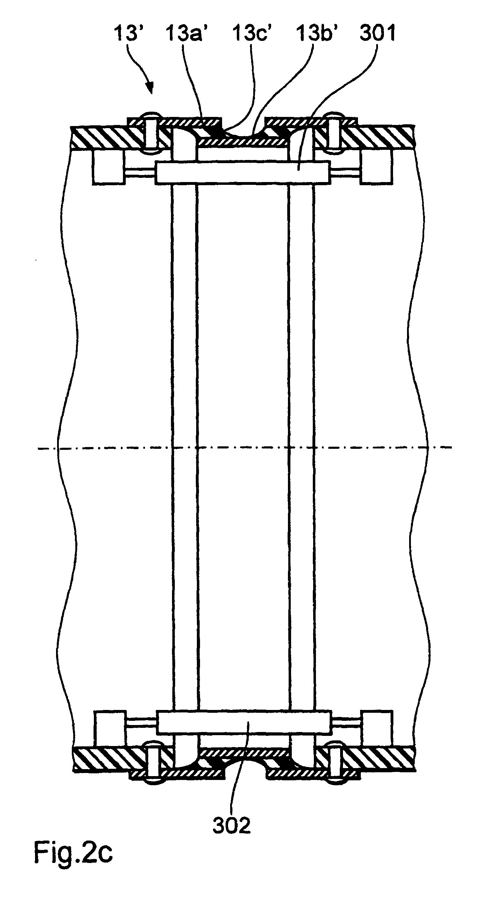

In den Figuren 2a und 2b ist eine bevorzugte konstruktive Ausbildung des Verbindungselementes 13 bei dem Gliederfahrzeug 3 nach Figur 1 in drei verschiedenen Positionen bzw. Zuständen der angrenzenden Rumpfsegmente 7 und 9 skizziert, und zwar in Figur 2a bei längsachsenparalleler Ausrichtung (Geradeausfahrt) ohne Längskrafteinwirkung und in Figur 2b bei geneigter Ausrichtung der Längsachsen (Kurvenfahrt). Das Verbindungselement 13 ist aus mit Abstand gereihten, starren, zweifach stumpf abgewinkelten Duromerelementen 13a und aus diese radial verbindenden, angeklebten Elastomerbrücken 13b aufgebaut. An die Wandungen 7a, 9a der Segmente 7, 9 grenzen bei der hier skizzierten Ausführung jeweils Duromerabschnitte 13 an, und diese sind mit der angrenzenden Wandung durch Verkleben stoffschlüssig und zusätzlich zur Sicherung über Nieten 13c formschlüssig verbunden. Alternativ sind auch einfach lösbare Schraubverbindungen denkbar. Die Verbindung zwischen den Segmentwandungen und den Verbindungselementen kann in einer Abwandlung auch über Elastomerabschnitte hergestellt sein, und die zusätzliche Sicherung kann gegebenenfalls entfallen.

In Fig. 2b ist zu erkennen, wie sich bei einer Neigung der Längsachsen A7, A9 der Segmente 7 und 9 relativ zueinander um einen kleinen Winkel *a* eine Dehnung des Aufbaus des Verbindungselementes 13 auf einer Seite (im oberen Bildteil), hingegen eine Stauchung auf der anderen Seite (im unteren Bildteil) ergibt, wobei sich die Elastomerabschnitte unter Ausübung einer Zugkraft F₁ auf die Segmentenden im gedehnten Bereich bzw. einer Druckkraft F₂ im gestauchten Bereich und mit über die Materialwahl vorbestimmbarer, die Verformung dämpfender innerer Reibung verformen. Die Kräftepaare F₁, F₂ erzeugen auf die Rumpfsegmente 7, 9 einwirkende Drehmomente um eine vertikale Achse, die im Zusammenspiel mit der Verbindung zwischen den Radpaaren 11 und den Segmenten 7, 9 jeweils eine "vorausschauende" Orientierung der einzelnen Rumpf segmente in Bezug auf den Fahrwegsverlauf bewirken. "Vorausschauend" ist die Orientierung dabei deshalb, weil der den nachfolgenden Segmenten der Fahrwegsverlauf von den vorausfahrenden dadurch "mitgeteilt" wird, daß sich das Fahrzeug an den Fahrweg "anschmiegt". Dieses "Anschmiegen" erfolgt segmentübergreifend. Eine Kombination mit einer weich geführten Einzelradaufhängung ist insofern besonders vorteilhaft.

In einer Unfallsituation bei Einwirkung einer großen, längsachsenparallelen Druckkraft werden die Elastomerabschnitte 13a in Längsrichtung gestaucht. Die Duromerelemente 13a werden unter entsprechender Verformung der Elastomerelemente 13b, die wegen der inneren Reibung in hohem Maße stoßenergieverzehrend wirkt, nahezu bis zum Anschlag aufeinander auflaufen. In diesem Zustand ist das Verbindungselement hochgradig querversteift, so daß ein Ausknicken - auch bei nicht völlig paralleler Orientierung der Segmentachsen A7, A9 - ebenso weitgehend verhindert wird wie das gefürchtete ungedämpfte "Teleskopieren" der Einheiten in Laufrichtung. Das Verhalten im Überlastungsfall der gezeigten Hybridstruktur ist aufgrund der speziellen Formgebung auch bei Einsatz von faserverstärkten Materialien ohne weiteres simulierbar, so daß eine Optimierung der Material- und Verbindungsmittelauswahl im Hinblick auf das Crashverhalten relativ leicht möglich ist.

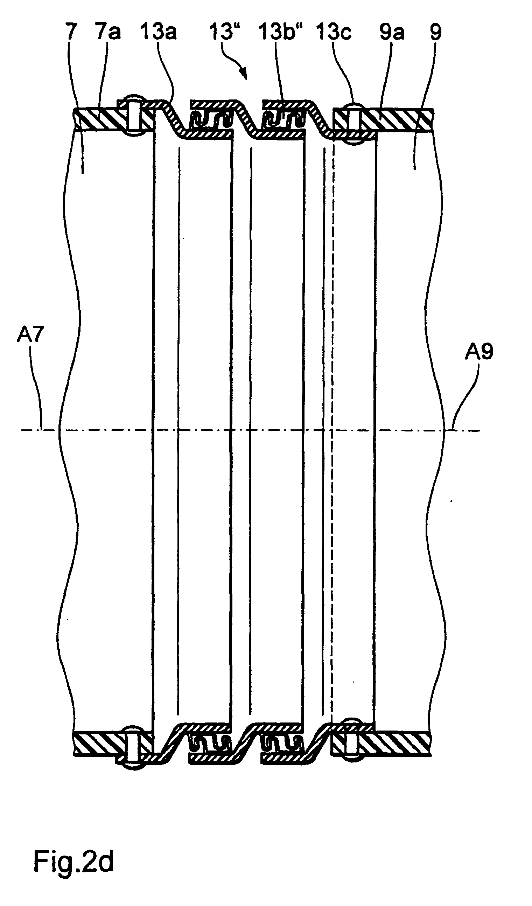

Figur 2d zeigt ein Ausführungsbeispiel mit Antriebselementen 301 und 302 zur Veränderung der die fahrdynamischen Eigenschaften verändernden Abstände zwischen den Profilelementen 13a' und 13b'. Die in dieser Figur gezeigte Ausführung ist spiegelsymmetrisch. Die Antriebselemente 301 und 302 können als hydraulische oder magnetische Aktivatoren ausgestaltet sein, wie sie weiter unten näher dargestellt sind.

Die Kombination mit Mitteln zur Verstellung der Radanordnung, speziell der zugehörigen Feder- und Dämpfungselemente, ist insofern vorteilhaft, als sie eine koordinierte sequentielle Lagesteuerung der Rumpfsegmente in der Vertikalen ermöglicht. Verstellbare Feder- und Dämpferelemente mit kurzen Ansprechzeiten für die Radaufhängung von Fahrzeugen sind aus der Kraftfahrzeugtechnik bekannt und können im Rahmen der Ausgestaltung der Erfindung grundsätzlich auch für ein Schienenfahrzeug eingesetzt werden.

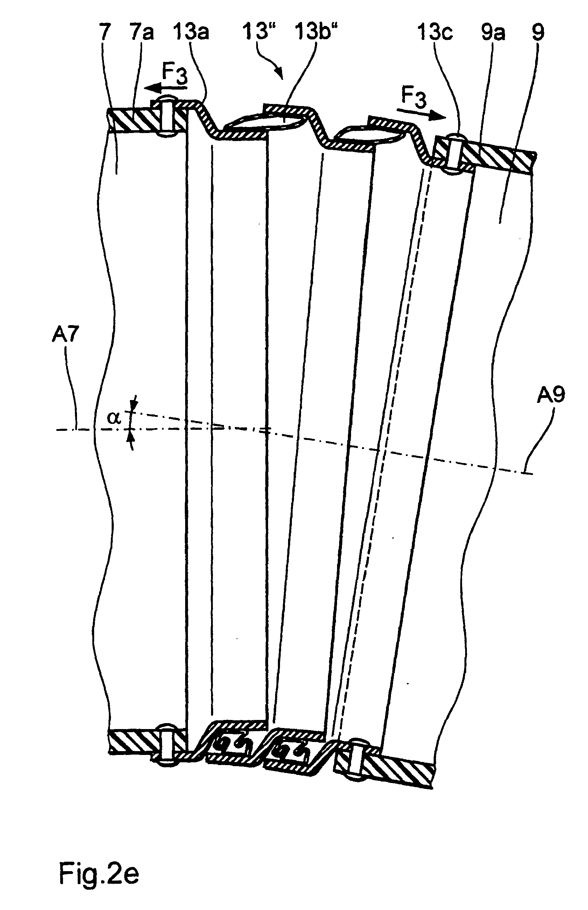

In den Figuren 2d und 2e ist dargestellt, wie die in Figur 2a dargstellte Ausführung eines Verbindungselements 13" mittels hohler Profilelemente 13b' aktiv verformt werden kann. Während in Figur 2d die entspannte, gerade gerichtete Situation der Verbindungselements 13" wiedergegeben ist, wird in Figur 2e durch Einblasen von Druckluft in die Profilelemente 13b" eine Expansionskraft F₃ erzeugt, welche eine gesteuerte Krümmung des Fahrzeugs an dieser Stelle hervorruft. Durch entsprechende weitere Unterteilung der Luftkammern kann durch Be- und Entlüften eine aktive Kontrolle des Fahrzeugs ausgeübt werden, wie sie weiter unten näher beschrieben ist.

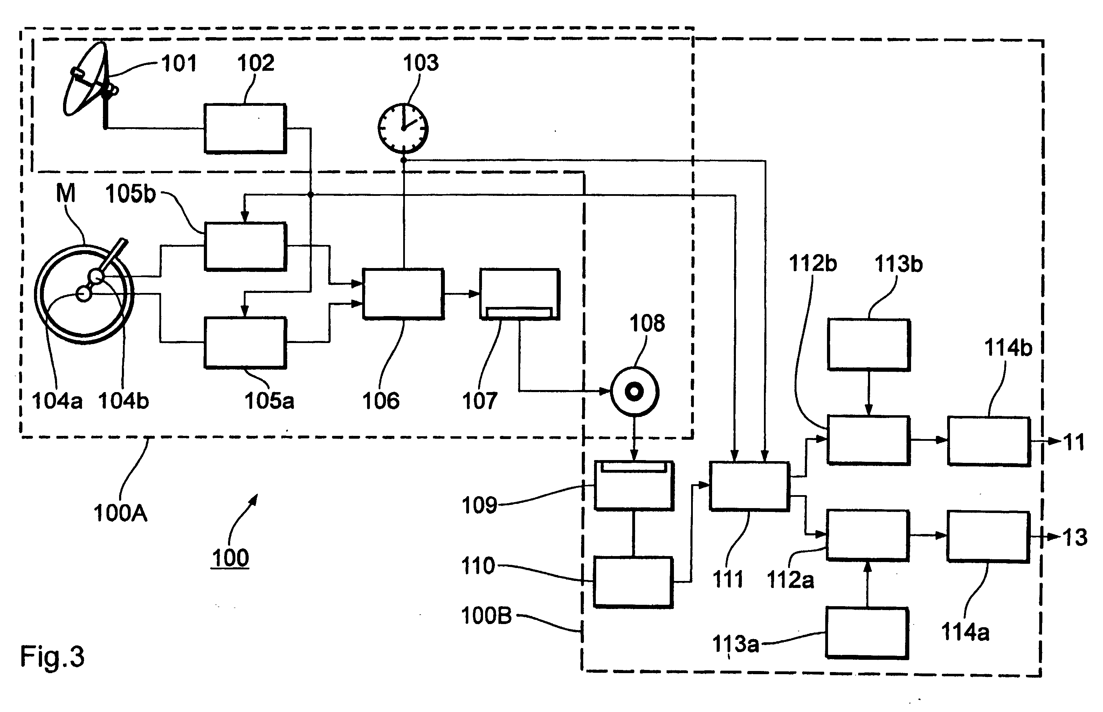

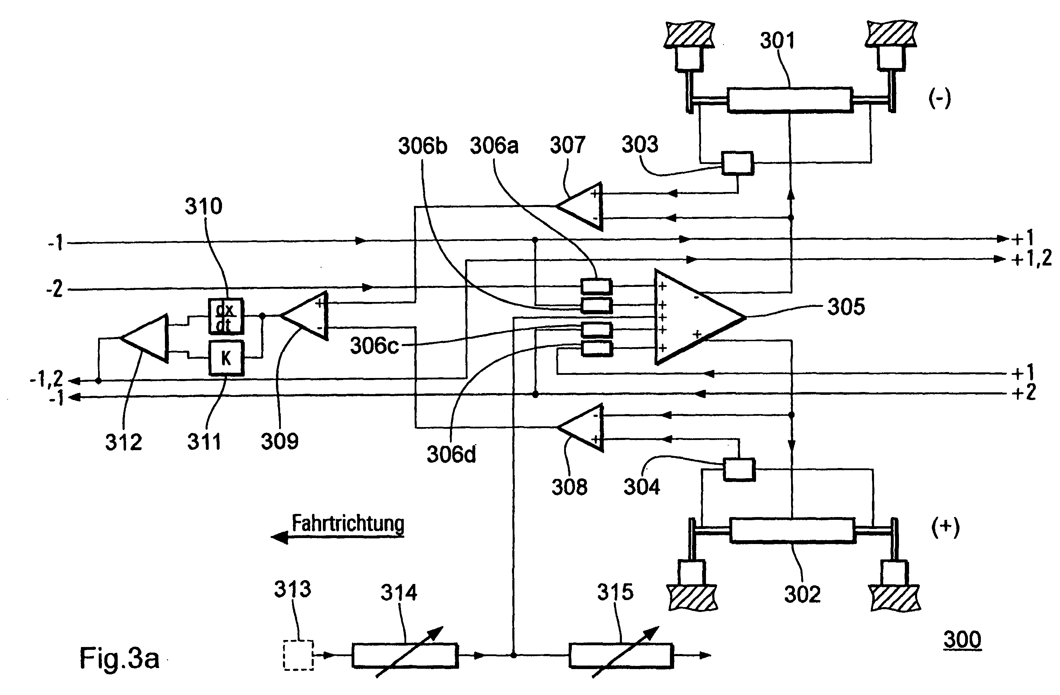

Figur 3 zeigt ein Funktions-Blockschaltbild der wesentlichen Komponenten eines Fahrwegprofilerfassungs- und Fahrdynamiksteuersystems 100 für einen Gliederfahrzeug mit dem in Fig. 1 skizzierten grundsätzlichen Aufbau. Das Gesamtsystem 100 umfaßt eine Erfassungsbaugruppe 100A und eine Steuerbaugruppe 100B und ist so konzipiert, daß die Erfassungsbaugruppe 100A nicht für den normalen Zugbetrieb, sondern nur für die (einmalige oder in größeren Abständen periodische) Aufnahme eines Fahrwegprofils benötigt wird und daher nur während Meßfahrten zur Aufnahme der geometrischen Daten bzw. in einem speziellen Meßfahrzeug installiert sein muß. Die Steuerbaugruppe 1 00B muß jedoch in jedem Fahrzeug bzw. Zug dauerhaft installiert sein.

Beiden Baugruppen gemeinsam ist eine Satellitenempfangsantenne 101 mit nachgeschalteter Positionsbestimmungseinheit 102, wie sie von Satelliten-Navigationsystemen (GPS) bekannt sind, und eine Zeitbasiseinheit 103, die zur exakten Positionsbestimmung des Fahrzeuges bzw. zur Erfassung des geometrischen Fahrwegprofils auf der Gesamterstreckung des Fahrweges dienen. Eine rasterartige Grobzuordnung erfolgt hierbei unter Nutzung der Navigationsbaugruppen 101, 102, wahrend eine interpolierende Feinpositionsbestimmung und ggfs. Verifizierung der Navigationsergebnisse aufgrund der Zeitsignale der Zeitbasiseinheit 103 vorgenommen wird.

Am Meßrad bzw. Meßradpaar M sind ein Quertaster 104a und ein Vertikaltaster 104b angeordnet, die mit den Eingängen einer Horizontalprofil-Berechungseinheit 105a bzw. einer Vertikalprofil-Berechnungseinheit 105b verbunden sind, die weiterhin mit dem Ausgang der Positionsbestimmungseinheit 102 verbunden sind und aufgrund der während einer Meßfahrt aufgenommenen Beschleunigungssignale die Horizontal- bzw. Vertikalkomponente des Fahrwegprofils errechnen. In einem den Berechnungseinheiten 105a, 105b nachgeschalteten Fahrwegsyntheserechner 106, der zudem Zeitsteuersignale von der Zeitbasiseinheit 103 erhält, wird hieraus eine aufgrund der Zeitsteuersignale verifizierte und in der Auflösung verbesserte dreidimensionale Darstellung des Fahrweges erzeugt. Diese wird über eine Speicherschreibsteuerung 107 in einem dem Fahrwegsyntheserechner 106 nachgeschalteten, als überschreibbarer oderaustauschbarer Festwertspeicher (z.B. als CD-ROM) ausgeführten Fahrwegspeicher 108 gespeichert.

Die im Fahrwegspeicher 108gespeichertendreidimensional erfaßten Fahrwegdaten bilden die Grundlage für die Steuerung der mechanischen Parameter und Geometrie der Wagensegment-Verbindungsabschnitte und der Achsen bzw. Radaufhängungen in der Steuerkomponente 100B. Diese umfaßt hierzu neben den schon erwähnten Funktionselementen eine Speicherlesesteuerung 109, einen FIFO-Arbeitsspeicher 110 zur Zwischenspeicherung jeweils eines aktuellen, begrenzten Fahrwegsabschnittes und eine eingangsseitig mit dem Arbeitsspeicher 110 sowie mit der Positionsberechnungsstufe 102 und der Zeitbasiseinheit 103 verbundene Dynamikberechnungsstufe 111 mit einer nachgeschalteten Horizontal-Steuerstufe 112a und einer Vertikal-Steuerstufe 112b. Der Horizontal-Steuerstufe 112a ist ein Verbindungsabschnitt-Kenndatenspeicher 113a zugeordnet, in dem die für die Ansteuerung der Wagensegment-Übergangs- bzw. Verbindungsabschnitte 13 relevanten Betriebsprogrammdaten etc. gespeichert sind. Analog ist der Vertikal-Steuerstufe 112b ein Radaufhängungs-Kenndatenspeicher 113b zugeordnet, in dem die für die Ansteuerung der Feder- und Dämpferelemente der Radaufhängungen 11 relevanten Programmdaten gespeichert sind. Ausgangsseitig sind die Horizontal-Steuerstufe 112a und die Vertikal-Steuerstufe 112b mit entsprechenden Stellgliedern 114a bzw. 114b (Fluidpumpen, Ventile etc.) eines den Verbindungsabschnitten 13 zugeordneten Pneumatiksystems bzw. eines den Feder- und Dämpferelementen der Radsätze 11 zugeordneten Hydrauliksystems verbunden, über die-sukzessive für die in Zuglängsrichtung aufeinanderfolgenden Segmentverbindungen und Radsätze -die berechnete Verstellung entsprechend dem momentanen Fahrwegprofil vorgenommen wird.

In einer (nicht gezeigten) Abwandlung des oben skizzierten Systems kann auf die Baugruppen zur Positionsbestimmung zugunsten von Mitteln zur hochpräzisen Erfassung der Fahrtgeschwindigkeit verzichtet werden, und das Auslesen der Fahrwegdaten aus dem hierfür vorgesehenen Speicher (bzw. einem Pufferspeicher) kann in Abhängigkeit vom Verhältnis der aktuellen momentanen Fahrtgeschwindigkeit zu der beim Einschreiben der Daten gegebenen momentanen Fahrtgeschwindigkeit erfolgen. Auch mit dieser Variante erfolgt die Bereitstellung der aktuell für die Steuerung der Fahrdynamik benötigten Daten grundsätzlich fahrzeugpositionsgerecht.
In Figur 3a ist ein Blockschaltbild wiedergegeben, welches eine Ansteuereinheit 300 für die aktive Steuerung eines Segmentverbindungselements um die Hochachse zeigt. Hierdurch lassen sich fahrdynamische Eigenschaften des Gliederfahrzeugs verändern. Es wird damit einerseits eine Anpassung an Bögen des Fahrwegs erreicht und andererseits einer möglichen Tendenz entgegengewirkt, Schwingungen aufzubauen, welche Stöße und Schleuderbewegungen sowie Nicken und Gieren hervorrufen könnten. Aus Gründen der Übersichtlichkeit befaßt sich die nachfolgende Darstellung lediglich mit der Steuerung, welche eine Ausrichtung (Krümmung) des Gliederfahrzeugs um eine Vertikalachse betrifft. Die entsprechenden Überlegungen sind in gleicher Weise für Krümmungen um die horizontale Querachse anwendbar, wobei sich die Steuerung um beide Achsen durch zwei entsprechende Systeme zu einem Konzept vereinigt, welches eine volle Kontrolle über die fahrdynamische Form und Ausrichtung des Gliederfahrzeugs entlang des Fahrwegs ermöglicht.

Im Bereich der Segmentverbindungselemente sind an einander gegenüberliegenden-Fahrzeugseiten linear wirkende Antriebselemente 301 und 302 jeweils an den zugeordneten festen Segmenten angelenkt. Diese Antriebselemente sind so ausgewählt, daß sie schnell in ihrer Reaktion sind und große Kräfte übertragen können. Bei der praktischen Ausführung ist hier ein hydraulisch oder elektromagnetisch wirkendes Element günstig. Da die zur Verfügung gestellte Antriebskraft gewöhnlich nicht eine vollständige Kompensation der fahrdynamisch hervorgerufenen Veränderungen bewirken kann - hierzu wäre im Grenzfall eine unendlich große Kraft erforderlich -, reagiert das System (, welches analog elektrisch betrachtet einen "endlichen" Ausgangswiderstand aufweist) in Wechselwirkung mit den fahrdynamisch auftretenden Kräften des Gliederfahrzeugs im Sinne eines Regelsystems mit Rückführung.

Die ursächlichen und trotz Krafteinwirkung verbleibenden Veränderungen in der relativen Position der Segmentverbindungselemente werden von Sensorelementen 303 und 304 abgefragt, um anschließend weiterverarbeitet zu werden. Ziel des in Figur 3a dargestellten Systems ist, fahrdynamische Veränderungen der Spaltbreite zwischen den Segmenten zu erfassen und dadurch zu kompensieren, daß diese geometrische Änderung an Nachbarelemente weitergeben wird, was zu einer Rückstellung des ursprünglich in seiner Spaltbreite veränderten Elements führt, um so eine Vergleichmässigung der geometrischen Form des Gliederfahrzeugs im Sinne der Vermeidung von abrupten Geometrieänderungen - wie relativ starken Abknickungen - zu erreichen. Statt dessen wird Harmonisierung der Gesamtform entsprechend dem Fahrbahnverlauf angestrebt. Auch plötzliche Tendenzen zur Formänderung werden unterdrückt. Auf diese Weise erhält das System eine stabile, d.h. "steife" möglichst gestreckte Form mit minimierter Krümmungsänderung, bei der eine Abweichung der Krümmung benachbarter Elemente von einer vorgegebenen, dem Fahrweg entsprechenden Soll-Linie möglichst weitgehend unterdrückt wird.

Bei der Ansteuerung der Antriebselemente handelt es sich um eine Differentialsteuerung, da die einander gegenüberliegenden Antriebselemente 301 und 302 nicht unabhängig voneinander sind. Eine Vergrößerung des Abstands der Segmente auf der einen Seite geht einher mit einer Verkleinerung des Abstands auf der gegenüberliegenden Seite, so daß sich eine Pendelbewegung um eine imaginäre Achse ergibt, die in Fahrzeugmitte gelegen ist. In Falle der seitlich angebrachten Antriebselemente ist dies eine vertikale Achse. Die Ansteuerung der Antriebselemente erfolgt also mit einer Differenzsteuerstufe 305 als Treiberstufe, welche mit Differentialausgängen versehen ist. Die Eingangssignale werden auch addiert, wobei verschiedene Steuersignale auf den Eingang der Differenzsteuerstufe wirken.

Um eine relativ steife Streckung der Gliederelemente zu bewirken und insoweit die Dynamik aufeinanderfolgender Gliederelemente zu "koppeln" werden die Ausgangssignale der Sensorelemente von benachbarten Segmentverbindungselementen zwischen Rumpfsegmenten bzw. -segmenten über Bewertungsetemente 306a bis 306d verarbeitet und summierend ausgewertet. Dabei werden die Signale einander gegenüberliegender Sensorelemente 303, 304 mit umgekehrtem Vorzeichen bewertet. Außerdem erfolgt noch eine Umkehrung der Vorzeichen in Bezug auf benachbarte Elemente. Dies hat zur Folge, daß zwei aufeinanderfolgende Segmente die Tendenz erhalten, ihre Krümmung zu "harmonisieren". Unterschiedliche Krümmungen aufeinanderfolgender Elemente führen zu einer gleichmäßigen Krümmung, da eine starke "Verstellung" eines benachbarten Segmentverbindungselements dazu führt, daß sich das benachbarte Element ebenfalls verstellt und sich damit im Mittel eine vergleichmäßigte Bogenformung über alle Segmente ergibt. Entsprechendes ist der Fall, wenn aufeinanderfolgende Elemente gegensinnig eingestellt sind. Dies führt zu einer im wesentlichen geraden Ausrichtung beider Elemente und damit zu einer "Streckung" des Zugs. Erreicht wird dies damit, daß die Steuerleitungen als Ausgänge der Schaltung 312 jeweils den entsprechenden Steuerleitungen von (beim hier dargestellten Beispiel) zwei vorangehenden (-1,-2) und zwei folgenden Segmenten (+ 1, + 2) zugeführt werden. Eingangssignale für die Differenzsteuerstufe werden ebenfalls von den beiden vorangehenden (-1, -2) und den beiden folgenden (+ 1, + 2) Segmenten bezogen. Die Signale vom vorigen Segment werden noch an das folgende weitergeleitet und umgekehrt.

Da auch - mit entsprechend unterschiedlicher Bewertung - die Positionen "n" weiterer Glieder übermittelt werden und in die aktuelle Positionierung eines Übergangsbereichs eingehen, ergibt sich trotz der Segmentierung eine "Aussteifung" des Gliederfahrzeugs über seine Länge, in der Weise, daß ein Bestreben besteht, eine möglichst große Streckung einzunehmen und insbesondere schlangenförmige Verformungen zu unterdrücken. Um tatsächlich an benachbarte Segmentverbindungselemente nur solche Signale weiterzugeben, welche aus fahrdynamischen Verformungen resultieren, wird das Steuersignal des eigenen Antriebselements an dem Segmentverbindungselement, an dem sich der Sensor befindet, durch Subtraktion eliminiert. Hierzu dienen zwei Differenzverstärker 307 und 308, welche als Operationsverstärker ausgestaltet sind. Die Ausgangssignale der Differenzverstärker 307 und 308 werden einem weiteren Differenzverstärker 309 zugeführt, welcher ein Summensignal bildet, das ein Maß für die Verstellung der beiden an dem zugeordneten Übergangsbereich anschließenden Segmente um eine (hier vertikale) Achse bildet. Dieses Summensignal ist beispielsweise positiv für Rechtsverdrehung und negativ für Linksverdrehung und wird von in benachbarten Segmentverbindungselementen vorhandenen entsprechenden Steuerbaugruppen im vorstehend beschriebenen Sinn ausgewertet.

Eine Differenzierstufe 310 und eine weitere Bewertungsstufe 311 für das nicht differenzierte Signal vom Ausgang des Differenzverstärkers 309 ermöglichen eine Hervorhebung der dynamischen Anteile der von den Sensoren aufgenommenen Signale im Sinne eines D-Gliedes, so daß auch bereits sich erst aufbauende Verformungen tendenziell ausgewertet und innerhalb des Steuerkonzepts herangezogen werden können.

Mit den beschriebenen Maßnahmen wird das dargestellte Gliederfahrzeug auf gerader Strecke optimal und mitgroßer segmentübergreifender Steifigkeit gestreckt geführt. Bei zu befahrenden Gleisbögen müßte die entsprechende Krümmung des Gliederfahrzeugs jedoch noch ausschließlich von den Führungskräften des Gleiskanals aufgebracht werden. Um dies zu vermeiden, wird der Differenzsteuerstufe 305 zusätzlich eine fahrwegabhängige Größe zugeführt, welche ein Maß für die aktuelle horizontale Krümmung des Gleiskanals bildet. Auch hierbei wird für eine Rechtskrümmung ein positives Signal angenommen und für eine Linkskrümmung ein negatives. Das fahrwegabhängige Signal wird von einem Signalaufnehmer (oder Speicher) 313 abgeleitet. Im Falle eines Signalaufnehmers ist dieser in der Zugspitze vorgesehen und gibt ein dem dort ermittelten aktuellen Schienenverlauf entsprechendes Signal ab. Dieses Signal wird zu den einzelnen Steuereinheiten 300der Segmentverbindungselemente jeweilsderart(geschwindigkeitsabhängig) verzögert zugeführt, daß das Signal sozusagen "ortsfest" innerhalb des Zugs an der Stelle der zugeordneten Krümmung verbleibt, da die dargestellte "Fahrtrichtung" entgegengesetzt zur Verzögerungsrichtung gerichtet ist.

Die Verzögerungseinheiten 314 und 315, welche jeweils einem Segment zugeordnet und somit nur für zwei aufeinanderfolgende Segmente in der Zeichnung dargestellt sind, werden der Fahrgeschwindigkeit des Zuges entsprechend verstellt. Jeder einem Segmentverbindungselement zugeordneten Steuereinheit wird somit das dem Schienenverlauf entsprechende Signal genau dann zugeführt, wenn der entsprechende Übergangsbereich den Ort mit der Krümmung erreicht, die dem Signal entspricht.

Damit nimmt das Gliederfahrzeug ohne wesentliche Aufwendung von Spurkräften insgesamt eine Form an, die derjenigen des Gleiskanals auch über seine Länge genau angepaßt ist.

Des weiteren kann hierbei zusätzlich die Berücksichtigung von Krümmungen um eine horizontale Achse und die Neigung in Kurven zusätzlich ausgelöst werden, wenn entsprechende Steuer- und Rechenelemente vorgesehen sind.

Von großer Bedeutung ist aber insbesondere, daß das Gliederfahrzeug mit diesen Maßnahmen eine die einzelnen Elemente übergreifende Steifigkeit erhält, welche seine fahrdynamischen Eigenschaften wesentlich verbessert. Damit erscheint für den Reisenden nicht mehr das einzelne Segment als Einheit, sondern das Gliederfahrzeug insgesamt bildet eine fahrdynamische Einheit, welche sich dem Fahrweg nach einer Art Servosteuerung und unter Ausgleich von Stößen oder ruckartigen Beschleunigungen selbsttätig aktiv anpaßt.

Auf diese Weise kann das Fahrzeug z.B. in präziser Weise nicht nur auf Fahrbahnkurven, sondern auch auf erhebliche lokale Defekte des Fahrweges durch sequentielle Anhebung oderzumindest "Weich-Einstellung" der einzelnen Radsätze reagieren, wodurch der Defekt sozusagen übersprungen wird, erhebliche Komforteinbußen für die Fahrgäste vermieden werden und ggfs. sogar der Gefahr einer Entgleisung entgegengewirkt wird.

Ein mitdem Ausgang einer Längsbeschteunigungs-Auswertungsstufe verbundener mehrstufiger Schwellwertdiskriminator ist mit einem zusätzlichen Steuereingang der Horizontalsteuerstufe verbunden und führt dieser bei Überschreitung vorgegebener (intern gespeicherter) Schwellwerte für die Beschleunigung bzw. Verzögerung in Fahrtrichtung eines von mehreren Notsteuersignalen zu. Hierdurch wird bei einer Notbremsung bzw. einem Frontal- oder Heckaufprall beschleunigungsabhängig eine von mehreren programmierten Verstellkennlinien für die Segmentverbindungen realisiert, mit der die Notbrems- bzw Crashdynamik des Schienenfahrzeugs im Sinne der obigen Erläuterungen optimiert wird.

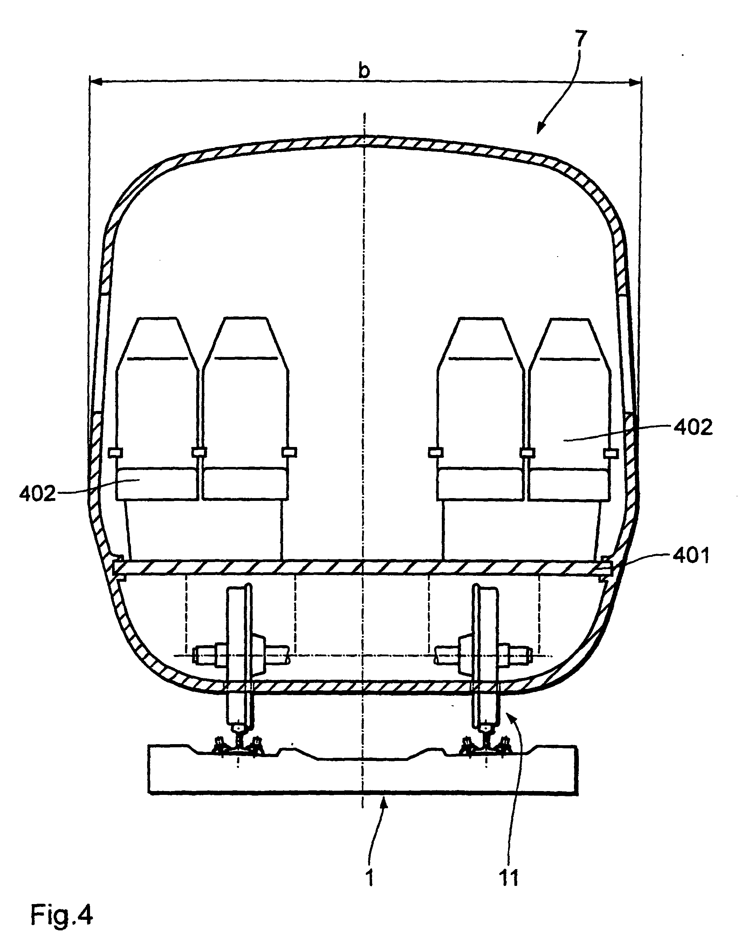

In Figur 4 ist ein Rumpfsegment, beispielsweise das Rumpfsegment 7, in einer vereinfachten Querschnittsansicht dargestellt. Das Fahrwerk, dessen Anbindung an das hier als Platte ausgebildete Traggestell 401 oben erläutert wurde und hier lediglich durch gestrichelte Linien symbolisiert wird, ist mit dem Radpaar 11 ausgestattet, dessen Räder durch Öffnungen, die außerhalb der Querschnittsebene liegen, aus dem Rumpfmantel zum Gleis 1 hin herausragen. Eine Auslenkung der Räder ist nicht vorgesehen. Drehgestelle kommen also nicht zur Anwendung. Bemerkenswert ist, daß sich der Segmentmantel zum Gleis hin bis in den Radbereich hinein - die Räder seitlich teilweise überdeckend - erstreckt und gesamten Bodenbereich mit Ausnahme der Raddurchlässe einschließt. Auf diese Weise wird eine große Homogenität des Längskraftflusses im Zugverband erzielt. Gleichzeitig wirkt der Segmentmantel nach außen schallisolierend und trägt so zu einer deutlichen Verringerung der durch das Rollgeräusch der Räder entstehenden Lärmbelästigung bei.

Oberhalb des Traggestells 401 kann zur Erhöhung des Fahrkomforts unter Zwischenschaltung zusätzlicher Dämpfungs- und Ferderungsstufen ein (nicht dargestellter) Innenboden gelagert sein, der sich mit aller beaufschlagten Last auf dem Traggestell 401 abstützt.

Im Innern des Rumpfsegmentes 7 ist eine gängige Viererbestuhlung mit Sitzpaaren 402 und einem Mittelgang vorgesehen. Es zeigt sich, daß gegegenüber herkömmlichen Vollbahn-Fahrzeugen der Normalspur ein erheblicher Raumgewinn erzielt wird. Die Breite b des dargestellten Rumpfsegments 7 beträgt 3,30 m, was deshalb besonders bemerkenswert ist, weil diese Breite praktisch über die ganze Länge des Zugs zur Verfügung steht. Hierdurch lassen sich auch eine Fünferbestuhlung oder Salons im Restaurantwagen mit beidseitiger Zweier-Bestuhlung einrichten, was eine verbesserte Nutzbarkeit mit sich bringt, da die Zahl der Passagiere pro Zuglänge vergrößert ist. Dabei ist der Komfort sogar noch vergrößert.

In variabler Ausgestaltung des innenraums der Rumpfsegmente sind unterschiedlichste Nutzungen möglich. So läßt sich ein einem Segment beispielsweise eine Küche oder auch ein Fahrradabteil unterbringen. Die Zahl der mit Türen versehenen Segmente läßt sich nach den individuellen Verkehrsgegebenheiten konfigurieren. Im Nahverkehr wird die Zahl der Türbereiche mit Stehgelegenheiten entsprechend größer bemessen. Für den Nachtverkehr lassen sich geräumige Schlafabteile vorsehen.

Es sind zahlreiche Varianten des erfindungsgemäßen Schienenfahrzeugs denkbar, die im Detail anders ausgeführt sind als die dargestellten Ausführungsbeispiele, dabei jedoch im Rahmen des durch die Patentansprüche definierten Schutzumfangs enthalten sind.

## Patentansprüche

1. Schienenfahrzeug (3) zum Betrieb auf einem herkömmlichen, darunter verlaufenden Eisenbahngleis (1), mit einer Mehrzahl gelenkig miteinander verbundener Rumpfsegmente (7, 9), die sich jeweils mit mindestens einem Radpaar (11) auf dem Gleis abstützen und die an ihren in Längsrichtung des Gleises weisenden Enden im wesentlichen querschnittsgleiche Segmentverbindungen (13") aufweisen, welche die äußere Kontur der Rumpfsegmente zwischen diesen fortsetzen und einen Distanzausgleich beim Befahren von Gleisbögen sowie Gleiskuppen und -senken bilden, **dadurch gekennzeichnet, dass** das Schienenfahrzeug als Gliederfahrzeug ausgebildet ist und dass die Segmentverbindungen (13") über den Querschnitt der Hohlprofilkontur der Rumpfsegmente verteilte, aktive Verbindungselemente (13b", 301, 302) aufweisen, die zur Einstellung der relativen Position benachbarter Rumpfsegmente (7, 9) zueinander ausgebildet sind.

2. Schienenfahrzeug nach Anspruch 1, **dadurch gekennzeichnet, dass** die Verbindungselemente (13b") zur ausschließlichen Überleitung des Kraftflusses zwischen den Rumpfsegmenten (7, 9) ausgebildet sind.

3. Schienenfahrzeug nach ein Anspruch 1 oder 2, **dadurch gekennzeichnet, daß** die Rumpfsegmente (7, 9) einen in Umfangsrichtung bis auf Öffnungen für die Räder (11) im wesentlichen geschlossenen, etwa röhrenförmigen Mantel haben.

4. Schienenfahrzeug nach einem der vorstehenden Ansprüche, **dadurch gekennzeichnet, daß** jedes Rumpfsegment (7, 9) ein innerhalb seines Mantels angeordnetes, vom Radpaar (11) gestützes Traggestell (401) aufweist, das sich im wesentlichen parallel zur Schienenoberfläche über die Länge und Breite des Rumpfsegments (7, 9) erstreckt und das zumindest einen wesentlichen Teil der Last des Mantels tragt.

5. Schienenfahrzeug nach Anspruch 4, **dadurch gekennzeichnet, daß** der Mantel am Traggestell (401) nahe dessen in Querrichtung weisenden Seiten befestigt ist.

6. Schienenfahrzeug nach Anspruch 4 oder 5, **dadurch gekennzeichnet, daß** die Traggestelle (401) benachbarter Rumpfsegmente elastisch miteinander verbunden sind.

7. Schienenfahrzeug nach einem der vorstehenden Ansprüche, **dadurch gekennzeichnet, daß** die Verbindungsgerade zwischen den Mittelpunkten der Räder eines Radpaars (11) in einer Querschnittsebene des zugehörigen Rumpfsegments (7, 9) liegt.

8. Schienenfahrzeug nach einem der Ansprüche 4 bis 7, **dadurch gekennzeichnet, daß** das Radpaar (11) mit dem jeweiligen Traggestell (401) elastisch verbunden ist.

9. Schienenfahrzeug nach einem der vorstehenden Ansprüche, **dadurch gekennzeichnet, daß** das Radpaar (11), in Längsrichtung des Schienenfahrzeugs gesehen, im wesentlichen mittig unterhalb des Traggestells (401) des jeweiligen Rumpfsegments (7, 9) angeordnet ist.

10. Schienenfahrzeug nach einem der vorstehenden Ansprüche, **dadurch gekennzeichnet, daß** die Verbindungselemente (13; 13') eine Hybridstruktur aus einer Mehrzahl im wesentlichen mit den Rumpfsegmenten querschnittsgleicher, starrer Elemente (13a; 13a', 13b'), deren Abmessung in Längsrichtung größer ist als ihre Dicke, und aus an jeweils zwei benachbarte starre Elemente angeformten Elastomerabschnitten (13b; 13c') aufweisen.

11. Schienenfahrzeug nach Anspruch 10, **dadurch gekennzeichnet, daß** die Längserstreckung der Elastomerabschnitte (13b; 13c') kleiner ist als diejenige der starren Elemente (13a; 13a', 13b').

12. Schienenfahrzeug nach Anspruch 10 oder 11, **dadurch gekennzeichnet, daß** die starren Elemente (13a) einen ersten und einen zweiten Abschnitt mit unterschiedlichen lateralen Abmessungen oder eine konische Ausbildung aufweisen und daß der zwei benachbarte starre Elemente verbindende Elastomerabschnitt (13b) den ersten Abschnitt des einen Elementes in im wesentlichen radialer Richtung mit dem zweiten Abschnitt des anderen Elementes verbindet derart, daß die Verbindungselemente (13) sich bei Einwirkung einer Druckkraft in Längsrichtung selbstzentrierend und energieabsorbierend verkürzen.

13. Schienenfahrzeug nach Anspruch 11 oder 12, **dadurch gekennzeichnet, daß** jeweils erste und zweite starre Elemente (13a', 13b') mit unterschiedlichen lateralen Abmessungen in Längsrichtung des Verbindungselementes (13') aufeinanderfolgen und der zwei benachbarte starre Elemente verbindende Elastomerabschnitt (13c') die Differenz der lateralen Abmessungen in radialer Richtung überbrückt derart, daß die Verbindungselemente sich bei Einwirkung einer Druckkraft in Längsrichtung selbstzentrierend und energieabsorbierend verkürzen.

14. Schienenfahrzeug nach einem der Ansprüche 10 bis 13, **dadurch gekennzeichnet, daß** die starren Elemente (13a; 13b', 13c') aus einem faserverstärkten oder selbstverstärkenden Polymer, insbesondere mit Vorzugsorientierung, gebildet sind.

15. Schienenfahrzeug nach einem der Ansprüche 10 bis 14, **dadurch gekennzeichnet, daß** die Elastomerabschnitte (13b; 13c') großflächig mit jeweils einem Außen- bzw. Innenflächenabschnitt der angrenzenden starren Elemente (13a; 13a', 13b') verbunden sind.

16. Schienenfahrzeug nach einem der vorstehenden Ansprüche, **dadurch gekennzeichnet, daß** die Ausrichtung von mindestens Teilen des Schienenfahrzeugs entsprechend dem von einer Sensorvorrichtung ermittelten, oder in einem Speicher (108) festgehaltenen und von dort abgefragten oder von extern übermittelten Verlauf der Gleisrichtung erfolgt.

17. Schienenfahrzeug nach einem der vorstehenden Ansprüche, **gekennzeichnet durch** eine gesteuerte Be- oder Entlastung einzelner Räder oder Radpaare (11).

18. Schienenfahrzeug nach einem der vorstehenden Ansprüche, **dadurch gekennzeichnet, daß** seine Ausrichtung zum Gleisverlauf unter Erzeugung einer die Rumpfsegmente übergreifenden, dem Gleisverlauf entsprechenden Fahrzeugform unabhängig von oder in Ergänzung zu der Spurführung durch die Radpaare (11) der Rumpfsegmente (5, 7, 9) erfolgt.

19. Schienenfahrzeug nach einem der vorstehenden Ansprüche, **dadurch gekennzeichnet, daß** zum Betrieb der aktiven Verbindungselemente (13, 13b) Stellglieder (114a, 114b, 301, 302) vorgesehen sind, die für ihren Antrieb mit Steuermitteln (1008, 112a, 112b, 300) verbunden sind.

20. Schienenfahrzeug nach einem der vorstehenden Ansprüche, **dadurch gekennzeichnet, daß** mindestens ein Sensor (303, 304) zur Erzeugung eines der relativen Position benachbarter Rumpfsegmente (7, 9) zueinander entsprechenden ersten Meßsignals vorgesehen ist und daß das Meßsignal auch an die Steuermittel (300) der aktiven Verbindungselemente (13b") mehrerer weiterer Rumpfsegmente (7, 9) übertragen wird.

21. Schienenfahrzeug nach Anspruch 19 oder 20, **dadurch gekennzeichnet, daß** aus den Meßsignalen durch die Steuermittel (300, 305, 306a bis 306d) ein Steuersignal erzeugt wird, das an die Stellglieder (301, 302) übertragen wird.

22. Schienenfahrzeug nach einem der Ansprüche 19 bis 21, **dadurch gekennzeichnet, daß** durch die angetriebene Bewegung der aktiven Verbindungselemente (13b") einer jeweiligen Segmentverbindung (13") das Einstellen der dort aneinandergrenzenden Rumpfsegmente (7, 9) in diejenige relative Position zueinander gehemmt wird, die das erste Meßsignal der in Fahrtrichtung des Schienenfahrzeugs vorangehenden Segmentverbindung (13") anzeigt.

23. Schienenfahrzeug nach einem der Ansprüche 19 bis 22, **dadurch gekennzeichnet, daß** durch die Antriebsbewegung der aktiven Verbindungselemente (13b") einer Segmentverbindung (13") jeweils eine relative Position entsprechend einem Mittelwert der an mehreren in Fahrtrichtung vorangehenden Segmentverbindungen (13") erzeugten ersten Meßsignale eingestellt wird.

24. Schienenfahrzeug nach einem der vorstehenden Ansprüche, **dadurch gekennzeichnet, daß** zur Führung im Gleis die Radpaare (11), insbesondere als einzeln geführte Räder ausgebildet, mit den Rumpfsegmenten steuerbar elastisch und gedämpft verbunden sind.

25. Schienenfahrzeug nach einem der vorstehenden Ansprüche, **gekennzeichnet durch** ein Fahrwegprofilerfassungssystem (100A) zur Erfassung des Quer- und/oder Vertikalverlaufes des Gleises (1) während einer Fahrt und zur Erzeugung von Steuersignalen zur Veränderung des Längs- und Queretastizitätsprofils und/oder der steuerbaren Geometrie der Segmentverbindungen (13) und wahlweise auch der Elastizitäts- und Dämpfungsprofile zwischen den Rumpfsegmenten (7, 9) und den zugehörigen Radpaaren (11).

26. Schienenfahrzeug nach Anspruch 25, **dadurch gekennzeichnet, daß** das Steuersystem (100B) im Speicher (108) festgehaltene Fahrwegdaten einer früheren Fahrt zur Erzeugung der Signale nutzt.

27. Schienenfahrzeug nach Anspruch 25 oder 26, **dadurch gekennzeichnet, daß** das Steuersystem (100B) eine Empfangsvorrichtung (101)für extern gespeicherte Fahrwegdaten und/oder für Positionsdaten des Schienenfahrzeugs, einen Zwischenspeicher (110) für Fahrwegdaten und eine Positionsbestimmungseinheit (102, 103) hat.

28. Schienenfahrzeug nach einem der vorstehenden Ansprüche, **gekennzeichnet durch** einen ersten (113a) und einen zweiten (113b) Kenndatenspeicher für Betriebsprogrammdaten zur Steuerung der Segmentverbindungen (13") bzw. der Radpaare (11).

29. Schienenfahrzeug nach einem der vorstehenden Ansprüche, **dadurch gekennzeichnet, daß** die Rumpfsegmente eine starre Baulänge haben, bei der im Bereich von Gleisbögen mit einem Radius bis herab zu 150 m jedes Rumpfsegment (7, 9) mit seiner Quererstreckung über das Gleis (1) beiderseits um jeweils eine Länge hinausragt, die längs des Gleises (1) im wesentlichen konstant ist.

30. Schienenfahrzeug nach einem der vorstehenden Ansprüche, **dadurch gekennzeichnet, daß** die starren Rumpfsegmente (5, 7, 9) eine Länge von weniger als 6 Metern, insbesondere von zwischen 3 und 5 Metern haben.

31. Schienenfahrzeug nach einem der vorstehenden Ansprüche, **dadurch gekennzeichnet, daß** die Erstreckung der Rumpfsegmente (7, 9) quer zum Gleis zwischen 3,00 und 3,30 m beträgt.

32. Schienenfahrzeug nach Anspruch 31, **dadurch gekennzeichnet, dass** zumindest eine Teilanzahl der Rumpfsegmente (7, 9) einen in Längsrichtung gleichbleibenden Hohlquerschnitt aufweist.

33. Schienenfahrzeug nach einem der vorstehenden Ansprüche, **dadurch gekennzeichnet, daß** die starren Rumpfsegmente (7, 9) in, insbesondere mehrschaliger, Faserverbundbauweise ausgeführt sind.

## Claims

1. A rail vehicle (3) for use on a conventional railroad track (1) that extends underneath the rail vehicle, with a plurality of body segments (7, 9) that are connected to one another in an articulated fashion and respectively supported on the track by means of at least one wheel pair (11), wherein the ends of said body segments which point in the longitudinal direction of the track contain segment connections (13'') of essentially identical cross section which continue the outer contour of the body segments between the body segments and compensate the distance between the body segments when driving on a curved track and when driving over elevations and depressions in the track,
**characterized in that**
the rail vehicle is realized in the form of an articulated vehicle, and **in that** the segment connections (13'') contain active connecting elements (13b'', 301, 302) that are distributed over the cross section of the hollow profile contour of the body segments and designed for adjusting the relative position between adjacent body segments (7, 9).

2. The rail vehicle according to Claim 1, **characterized in that** the connecting elements (13b'') are designed for the exclusive power transmission between the body segments (7, 9).

3. The rail vehicle according to Claim 1 or 2, **characterized in that** the body segments (7, 9) have an approximately tubular shell that is essentially closed in the circumferential direction with the exception of openings for the wheels (11).

4. The rail vehicle according to one of the preceding claims, **characterized in that** each body segment (7, 9) contains a supporting frame (401) that is arranged within the body segment shell and supported by the wheel pair (11), wherein the supporting frame extends over the length and width of the body segments (7, 9) essentially parallel to the rail surface and carries at least a significant portion of the shell load.

5. The rail vehicle according to Claim 4, **characterized in that** the shell is mounted on the supporting frame (401) near its sides that point in the transverse direction.

6. The rail vehicle according to Claim 4 or 5, **characterized in that** the supporting frames (401) of adjacent body segments are elastically connected to one another.

7. The rail vehicle according to one of the preceding claims, **characterized in that** the connecting line between the centers of the wheels of a wheel pair (11) lies in a cross-sectional plane of the corresponding body segment (7, 9).

8. The rail vehicle according to one of Claims 4-7, **characterized in that** the wheel pair (11) is elastically connected to the respective supporting frame (401).

9. The rail vehicle according to one of the preceding claims, **characterized in that** the wheel pair (11) is, viewed in the longitudinal direction of the rail vehicle, essentially arranged centrally underneath the supporting frame (401) of the respective body segment (7, 9).

10. The rail vehicle according to one of the preceding claims, **characterized in that** the connecting elements (13; 13') have a hybrid structure consisting of a plurality of rigid elements (13a; 13a', 13b') that essentially have the same cross section as the body segments and the dimension of which in the longitudinal direction is greater than their thickness, and of elastomer sections (13b; 13c') that are integrally formed onto two respectively adjacent rigid elements.

11. The rail vehicle according to Claim 10, **characterized in that** the longitudinal dimension of the elastomer sections (13b; 13c') is smaller than that of the rigid elements (13a; 13a', 13b').

12. The rail vehicle according to Claim 10 or 11, **characterized in that** the rigid elements (13a) consist of a first and a second section with different lateral dimensions or are realized in a conical fashion, and **in that** the elastomer section (13b) for connecting the two adjacent rigid elements connects the first section of one element to the second section of the other element in essentially the radial direction, namely such that the connecting elements (13) are shortened in the longitudinal direction in a self-centering and energy-absorbing fashion under the influence of a compressive force.

13. The rail vehicle according to Claim 11 or 12, **characterized in that** first and second rigid elements (13a', 13b') with different lateral dimensions respectively follow one another in the longitudinal direction of the connecting elements (13'), and **in that** the elastomer section (13c') that connects two adjacent rigid elements radially compensates the difference between the lateral dimensions, namely such that the connecting elements are shortened in the longitudinal direction in a self-centering and energy-absorbing fashion under the influence of a compressive force.

14. The rail vehicle according to one of Claims 10-13, **characterized in that** the rigid elements (13a; 13b', 13c') are manufactured from a fiber-reinforced or self-reinforcing polymer, in particular, with preferred orientation.

15. The rail vehicle according to one of Claims 10-14, **characterized in that** a large-surface connection is respectively produced between the elastomer sections (13b; 13c') and an outer surface section and an inner surface section of the adjacent rigid elements (13a; 13a', 13b').

16. The rail vehicle according to one of the preceding claims, **characterized in that** at least parts of the rail vehicle are aligned in accordance with the progression of the track direction which is determined with a sensor arrangement or stored in a memory (108) and retrieved or externally transmitted.

17. The rail vehicle according to one of the preceding claims, **characterized in** a controlled load application on or load alleviation of individual wheels or wheel pairs (11).

18. The rail vehicle according to one of the preceding claims, **characterized in that** its alignment referred to the track progression is realized by generating a vehicle shape that overlaps the body segments and corresponds to the track progression independently of or in addition to the tracking by the wheel pairs (11) of the body segments (5, 7, 9).

19. The rail vehicle according to one of the preceding claims, **characterized in that** actuators (114a, 114b, 301, 302) are provided for operating the active connecting elements (13, 13b), wherein said actuators are connected to control means (100B, 112a, 112b, 300).

20. The rail vehicle according to one of the preceding claims, **characterized in that** at least one sensor (303, 304) is provided for generating a first measuring signal that corresponds to the relative position between adjacent body segments (7, 9), and **in that** the measuring signal is also transmitted to the control means (300) of the active connecting elements (13b'') of several other body segments (7, 9).

21. The rail vehicle according to Claim 19 or 20, **characterized in that** the control signal to be transmitted to the actuators (301, 302) is generated from the measuring signals by the control means (300, 305, 306a-306d).

22. The rail vehicle according to one of Claims 19-21, **characterized in that** the driven movement of the active connecting elements (13b'') of a segment connection (13'') inhibits the adjustment of the respectively adjacent body segments (7, 9) into the relative position indicated by the first measuring signal of the preceding segment connection (13'') viewed in the driving direction of the rail vehicle.

23. The rail vehicle according to one of Claims 19-22, **characterized in that** the driven movement of the active connecting elements (13b'') of a segment connection (13'') respectively adjusts a relative position in accordance with an average value of the first measuring signals generated at several preceding segmental connections (13'') viewed in the driving direction.

24. The rail vehicle according to one of the preceding claims, **characterized in that** the wheel pairs (11) are, in particular, realized in the form of individually guided wheels that are controllably connected to the body segments in an elastic and damping fashion.

25. The rail vehicle according to one of the preceding claims, **characterized in** a track profile measuring system (100A) for measuring the transverse and/or vertical progression of the track (1) while driving and for generating control signals for changing the longitudinal and transverse elasticity profile and/or the controllable geometry of the segment connections (13), as well as for selectively changing the elasticity and damping profile between the body segments (7, 9) and the corresponding wheel pairs (11).

26. The rail vehicle according to Claim 25, **characterized in that** the control system (100B) generates the signals based on track data that was recorded in the memory (108) during a prior run.

27. The rail vehicle according to Claim 25 or 26, **characterized in that** the control system (100B) comprises a receiver (101) for externally stored track data and/or for position data of the rail vehicle, an intermediate memory (110) for track data and a position measuring unit (102, 103).

28. The rail vehicle according to one of the preceding claims, **characterized in** a first (113a) and a second (113b) parameter memory for operating program data which respectively serve for controlling the segment connections (13'') and the wheel pairs (11) .

29. The rail vehicle according to one of the preceding claims, **characterized in that** the body segments have a rigid structural length, wherein each body segment (7, 9) transversely protrudes over the track (1) on both sides by a length that is essentially constant along the track (1) when driving on curved tracks with a radius of no less than 150 m.

30. The rail vehicle according to one of the preceding claims, **characterized in that** the rigid body segments (5, 7, 9) have a length of less than 6 m, in particular between 3 and 5 m.

31. The rail vehicle according to one of the preceding claims, **characterized in that** the dimension of the body segments (7, 9) transverse to the track lies between 3.00 and 3.30 m.

32. The rail vehicle according to Claim 31, **characterized in that** at least some of the body segments (7, 9) have a constant hollow cross section in the longitudinal direction.

33. The rail vehicle according to one of the preceding claims, **characterized in that** the rigid body segments (7, 9) are, in particular, realized in the form of a multi-shell fiber composite structure.

## Revendications

1. Véhicule sur rails (3) pour le service sur un rail de chemin de fer (1) conventionnel courant sous celui-ci, avec une pluralité de segments de caisse (7, 9) reliés les uns aux autres de manière articulée, qui reposent chacun sur le rail par l'intermédiaire d'au moins une paire de roues (11) et qui présentent, à leurs extrémités faisant face la direction longitudinale du rail, des liaisons de segments (13") ayant sensiblement la même section transversale, qui continuent le contour extérieur des segments de caisse entre ceux-ci et qui constituent une compensation de distance lors de la marche en courbe ainsi que du passage de sommets ou de creux des rails,
**caractérisé en ce que**
le véhicule sur rails est formé comme un véhicule articulé et **en ce que** les liaisons de segments (13'') comportent des éléments de liaison actifs (13b'', 301, 302) répartis sur la section transversale du contour à profil creux des segments de caisse, aménagés pour le réglage de la position relative de segments de caisse (7, 9) voisins l'un par rapport à l'autre.

2. Véhicule sur rails selon la revendication 1, **caractérisé en ce que** les éléments de liaison (13b'') sont aménagés pour la transmission exclusive des efforts entre les segments de caisse (7, 9) .

3. Véhicule sur rails selon la revendication 1 ou 2, **caractérisé en ce que** les segments de caisse (7, 9) ont, dans le sens de la périphérie, une carcasse sensiblement tubulaire, fermée pour l'essentiel, à l'exception d'ouvertures pour les roues (11).

4. Véhicule sur rails selon l'une des revendications précédentes, **caractérisé en ce que** chaque segment de caisse (7, 9) possède un châssis porteur (401) disposé à l'intérieur de sa carcasse, supporté par la paire de roues (11), qui s'étend sensiblement parallèlement à la surface des rails sur la longueur et la largeur du segment de caisse (7, 9) et qui supporte au moins une partie significative de la charge de la carcasse.

5. Véhicule sur rails selon la revendication 4, **caractérisé en ce que** la carcasse est fixée sur le châssis porteur (401) à proximité de ses côtés faisant face à la direction transversale.

6. Véhicule sur rails selon la revendication 4 ou 5, **caractérisé en ce que** les châssis porteurs (401) de segments de caisse voisins sont reliés les uns aux autres de façon élastique.

7. Véhicule sur rails selon l'une des revendications précédentes, **caractérisé en ce que** la droite reliant les points de centre des roues d'une paire de roues (11) se trouve dans un plan transversal du segment de caisse (7, 9) correspondant.

8. Véhicule sur rails selon l'une des revendications 4 à 7, **caractérisé en ce que** la paire de roues (11) est reliée de façon élastique avec le châssis porteur (401) correspondant.

9. Véhicule sur rails selon l'une des revendications précédentes, **caractérisé en ce que** la paire de roues (11) est disposées de manière sensiblement centrale sous le châssis porteur (401) de chaque segment de caisse (7, 9), vu dans le sens longitudinal du véhicule articulé.

10. Véhicule sur rails selon l'une des revendications précédentes, **caractérisé en ce que** les éléments de liaison (13 ; 13') ont une structure hybride composée d'une pluralité d'éléments rigides (13a ; 13a', 13b') présentant une section transversale sensiblement identique à celle des segments de caisse, dont la dimension dans le sens longitudinal est supérieure à leur épaisseur, et de sections en élastomère (13b ; 13c') épousant chaque fois deux éléments rigides voisins.

11. Véhicule sur rails selon la revendication 10, **caractérisé en ce que** l'extension longitudinale des sections en élastomère (13b ; 13c') est inférieure à celle des éléments rigides (13a ; 13a' ; 13b').

12. Véhicule sur rails selon la revendication 10 ou 11, **caractérisé en ce que** les éléments rigides (13a) comportent une première et une seconde section avec des dimensions latérales différentes ou une forme conique et **en ce que** la section en élastomère (13b) reliant deux éléments rigides voisins relie la première section de l'un des éléments dans une direction sensiblement radiale à la seconde section de l'autre élément, de sorte que les éléments de liaison (13) se raccourcissent sous l'effet d'une force de compression dans le sens longitudinal en s'auto-centrant et en absorbant l'énergie,

13. Véhicule sur rails selon la revendication 11 ou 12, **caractérisé en ce que** des premiers et des seconds éléments rigides (13a', 13b') ayant des dimensions latérales différentes se suivent dans le sens longitudinal de l'élément de liaison (13') et la section en élastomère (13c') reliant deux éléments rigides voisins compense la différence des dimensions latérales dans le sens radial de sorte que les éléments de liaison, dans le cas de l'effet d'une force de compression longitudinale, se raccourcissent en s'auto-centrent en absorbant l'énergie.

14. Véhicule sur rails selon l'une des revendications 10 à 13, **caractérisé en ce que** les éléments rigides (13a ; 13b' ; 13c') sont réalisés dans un polymère renforcé de fibres ou renforçant par lui-même, en particulier avec une orientation préférentielle.

15. Véhicule sur rails selon l'une des revendications 10 à 14, **caractérisé en ce que** les segments en élastomère (13b ; 13c') sont reliés sur une grande surface avec respectivement une section de surface extérieure et une section de surface intérieure des éléments rigides (13a ; 13a' ; 13b') adjacents.

16. Véhicule sur rails selon l'une des revendications précédentes, **caractérisé en ce que** l'alignement d'au moins des parties du véhicule sur rails est réalisé en fonction du tracé de l'orientation des rails déterminé par un dispositif de capteur ou mémorisé dans une mémoire (108) et lu depuis celle-ci ou transmis depuis l'extérieur.

17. Véhicule sur rails selon l'une des revendications précédentes, **caractérisé par** une mise sous charge ou un délestage contrôlé de roues ou de paires de roues (11) individuelles.

18. Véhicule sur rails selon l'une des revendications précédentes, **caractérisé en ce que** son alignement sur le tracé des rails s'effectue par génération d'une forme du véhicule s'étendant à tous les segments de caisse et correspondant au tracé des rails, indépendamment ou en complément du guidage latéral des segments de caisse (5, 7, 9) par les paires de roues (11).

19. Véhicule sur rails selon l'une des revendications précédentes, **caractérisé en ce que** des organes de réglage (114a, 114b, 301, 302), reliés pour leur actionnement avec des moyens de commande (110B, 112a, 112b, 300), sont prévus pour le fonctionnement des éléments de liaison actifs (13, 13b).

20. Véhicule sur rails selon l'une des revendications précédentes, **caractérisé en ce qu'**au moins un capteur (303, 304) générant un premier signal de mesure correspondant à la position relative de segments de caisse (7, 9) voisins l'un par rapport à l'autre est prévu et **en ce que** le signal de mesure est également transmis aux moyens de commande (300) des éléments de liaison actifs (13b'') de plusieurs autres segments de caisse (7, 9).

21. Véhicule sur rails selon la revendication 19 ou 20, **caractérisé en ce qu'**un signal de commande, qui est transmis aux organes de réglage (301, 302), est généré par les moyens de commande (300, 305, 306a à 306d) sur la base des signaux de mesure.

22. Véhicule sur rails selon l'une des revendications 19 à 21, **caractérisé en ce que** le mouvement entraîné des éléments de liaison actifs (13b'') d'une liaison de segments (13'') empêche le réglage des segments de caisse (7, 9) adjacents dans la position relative indiquée par le premier signal de mesure de la liaison de segment (13'') précédente dans le sens de la marche du véhicule sur rails.

23. Véhicule sur rails selon l'une des revendications 19 à 22, **caractérisé en ce que** le mouvement d'entraînement des éléments de liaison actifs (13b'') d'une liaison de segments (13'') occasionne le réglage d'une position relative correspondant à une valeur moyenne des premiers signaux de mesure générés par plusieurs liaisons de segments (13'') précédentes dans le sens de la marche.

24. Véhicule sur rails selon l'une des revendications précédentes, **caractérisé en ce que**, pour le guidage dans le rail, les paires de roues (11), conçues en particulier sous la forme de roues guidées individuellement, sont reliées au segment de caisse de manière élastique commandable et amortie.

25. Véhicule sur rails selon l'une des revendications précédentes, **caractérisé par** un système d'acquisition du profil du tracé (100A) pour l'acquisition du tracé transversal et/ou vertical du rail (1) pendant un trajet et pour la génération de signaux de commande pour la modification du profil d'élasticité longitudinal et transversal et/ou de la géométrie commandable des liaisons de segments (13) et, au choix, aussi des profils d'élasticité et d'amortissement entre les segments de caisse (7, 9) et les paires de roues (11) correspondantes.

26. Véhicule sur rails selon la revendication 25, **caractérisé en ce que** le système de commande (100B) exploite des données de trajet d'un trajet antérieur mémorisées dans la mémoire (108) pour générer les signaux.

27. Véhicule sur rails selon la revendication 25 ou 26, **caractérisé en ce que** le système de commande (100B) comporte un dispositif de réception (101) pour des données de trajet mémorisées en externe et/ou pour des données de position du véhicule sur rails, une mémoire intermédiaire (110) pour les données de trajet et une unité de détermination de la position (102, 103).

28. Véhicule sur rails selon l'une des revendications précédentes, **caractérisé par** une première (113a) et une seconde (113b) mémoire des données caractéristiques pour les données du programme d'exploitation pour la commande respectivement des liaisons de segments (13'') et des paires de roues (11).

29. Véhicule sur rails selon l'une des revendications précédentes, **caractérisé en ce que** les segments de caisse ont une longueur rigide hors tout pour laquelle, dans la plage de courbes de rails avec un rayon descendant jusqu'à 150 m, l'extension transversale de chaque segment de caisse (7, 9) dépasse des deux côtés du rail (1) d'une longueur sensiblement constante le long du rail (1).

30. Véhicule sur rails selon l'une des revendications précédentes, **caractérisé en ce que** les segments de caisse rigides (5, 7, 9) ont une longueur inférieure à 6 mètres, en particulier entre 3 et 5 mètres.

31. Véhicule sur rails selon l'une des revendications précédentes, **caractérisé en ce que** l'extension des segments de caisse (7, 9) dans le sens transversal au rail se situe entre 3,00 et 3,30 m.

32. Véhicule sur rails selon la revendication 31, **caractérisé en ce qu'**au moins une partie des segments de caisse (7, 9) présente une section transversale creuse constante dans la direction longitudinale.

33. Véhicule sur rails selon l'une des revendications précédentes, **caractérisé en ce que** les segments de caisse (7, 9) rigides sont réalisés en structure composite renforcée de fibres, en particulier multicoques.
